# EUROPEAN PATENT APPLICATION

(11) **EP 4 659 570 A1**
(43) Date of publication of application: **10.12.2025**
(21) Application number: 24180274.3
(22) Date of filing: 05.06.2024
(51) Int. Cl.: A01G 23/00, A01G 23/08

(54) **METHOD AND CONTROL SYSTEM FOR CONTROLLING A BOOM ASSEMBLY AND VEHICLE**

(71) Applicant: Deere & Company, Moline, IL 61265 (US)
(72) Inventor: LAITINEN, SIMO, 68163 Mannheim (DE); PALMROTH, MIKKO, 68163 Mannheim (DE)
(74) Representative: Reichert, Christian

(57) **Abstract**

The invention concerns a method for controlling a boom assembly (12), the boom assembly (12) being adapted for use on a forestry vehicle (30), the boom assembly (12) comprising at least two booms (14, 16) which are movably connected to each other and the vehicle (30), the boom assembly (12) being controlled by hydraulic power, further comprising an extension boom (18), which comprises a free end of the boom assembly (12) and a boom tip (20), the extension boom (18) being linearly movable, the boom assembly (12) comprising a position sensor to measure the position of the extension boom (18), a control unit (10), adapted to transfer operator commands to control the boom assembly (12), adapted to receive and calculate the position data from the extension boom (18), wherein, when the operator issues a command to bring the boom tip (20) closer to the vehicle (30), in case the extension boom (18) is positioned beyond a predetermined extension limit, the control unit (10) will solely first control the extension boom (18).

## Description

The invention is a method to control a boom assembly of a forest machine, a system to control a boom assembly and a vehicle being able to control a boom assembly.

Forestry machines comprise an articulated boom assembly to which further a tool is attached to a boom tip of the boom assembly. The tool may be a gripping tool, an excavating tool, or in case of forestry related working machines a harvesting or processing head, or a log grapple. Such tools handle heavy load, that may comprise a load of soil or logs or other raw material. Usually, such boom assemblies are controlled by hydraulic actuators that are driven by hydraulic pressure from one or more pumps. The pumps are usually powered by the primary power source of the vehicle but may also be driven by electrical power.

When the boom assembly is used to lift load, the primary power is providing the lifting capacity via the hydraulic circuit, the pumps, and the hydraulic actuators, also called lifting moment. Every load on the boom assembly has a lever arm which results in a lifting torque which is applied to the boom assembly. In case a load is handled that requires more lifting capacity than available, or is exceeding the lift capacity, the boom assembly will provide only limited, slow or no movement capabilities. When a resulting lifting torque exceeds the lifting moment of a boom assembly, a loading operation cannot proceed. The boom assembly operation requires therefore preplanning of the load and the movements involved. The operation of the boom assembly, especially when being in a far reach, requires a high lifting moment.

The operator is required to react manually to a non-responsive or slow lifting command. The operator has to evaluate the situation and manually has to move single booms of the boom assembly so that the lifting torque is reduced until the lifting moment is sufficient to lift the boom tip of the boom assembly.

The present invention overcomes the aforesaid problem by providing a control system for a boom assembly according to the independent claims.

The invention is a method for controlling a boom assembly, the boom assembly being adapted for use on a forestry vehicle, the boom assembly comprising at least two booms which are movably connected to each other and the vehicle, the boom assembly being controlled by hydraulic power, further comprising an extension boom, which comprises a free end of the boom assembly and a boom tip, the extension boom being linearly movable, the boom assembly comprising a position sensor to measure the position of the extension boom, a control unit, adapted to transfer operator commands to control the boom assembly, adapted to receive and calculate the position data from the extension boom, wherein, when the operator issues a command to bring the boom tip closer to the vehicle, in case the extension boom is positioned beyond a predetermined extension limit, the control unit will solely first control the extension boom, and in case the extension boom is positioned below the predetermined extension limit, the control unit will control all booms of the boom assembly in parallel.

The method allows that the boom assembly is automatically moved according to the position of the extension boom. The operator is freed of the need to assume the potential load on the boom assembly and making assumptions about possible loss of lifting power. The operator instead issues the move command with the control surfaces and the control unit, depending on the position sensor feedback issues the movement solely of the extension boom first or of the complete boom assembly right away. The workload on the operator is reduced and the workflow of the vehicle is increased by avoiding timely effort to manually move the boom assembly so that the lifting force is restored in case of exceeding weight of the load in the working tool.

In another embodiment the method can be adapted to be used in a forest harvester vehicle.

The harvester vehicle is used to fell trees and cut the stem into logs. During the felling operation and the transition to the cutting operation the harvester head is gripping the tree. Depending on the felling position and the reach of the boom assembly the boom assembly may not have enough lifting force which slows the work progress. It also requires the operator to assume an alternative control scheme of the boom assembly to move the boom tip closer to the vehicle. The method allows the boom assembly to automatically move inwards without the operator making an additional work step. Instead, the method will move the boom tip closer to the vehicle by solely moving the extension boom inward first, if a reach limit of the extension boom is exceeded. This frees the operator of any additional work stress and enables a smoother processing during the felling and cutting operation.

In another embodiment, in case the extension boom is beyond the predetermined extension the control unit can use all booms of the boom assembly, when the extension boom has moved inwards below the predetermined extension limit.

The method uses solely the extension boom to move the boom tip inwards in case the position is beyond the predetermined limit. At the time the extension boom is moved inwards below the limit, the control unit control all booms and its actuators to move the boom tip further inwards. The method optimizes the movement speed of the boom assembly and reduces lag which can occur if the reach of the boom assembly leads to a loss of lifting force. The method controls the boom assembly in such a manner that the workability of the boom assembly is maintained, even at large reach and ensures a high work capacity of the vehicle. Another invention is a system for a forestry vehicle, comprising a boom assembly having at least two booms which are movably connected to each other and the vehicle, an extension boom, which comprises a free end of the boom assembly and a boom tip, the extension boom being linearly movable, a position sensor to measure the position of the extension boom, a control unit, adapted to transfer operator commands to control the boom assembly, adapted to receive and calculate the position data from the extension boom, wherein in case of the operator commando to bring the boom tip closer to the vehicle, and if the extension boom is positioned beyond a predetermined extension limit, the control unit will solely first control the extension boom until the extension boom position is below the predetermined extension limit and in case the extension boom is positioned below the predetermined extension limit, the control unit will control all booms of the boom assembly in parallel.

The systems allows that the boom assembly is automatically moved according to the position of the extension boom. The operator is freed of the need to assume the potential load on the boom assembly and making assumptions about possible loss of lifting power. The operator instead issues the move command with the control surfaces and the control unit, depending on the position sensor feedback issues the movement solely of the extension boom first or of the complete boom assembly right away. The workload on the operator is reduced and the workflow of the vehicle is increased by avoiding timely effort to manually move the boom assembly so that the lifting force is restored in case of exceeding weight of the load in the working tool.

Another invention is a forestry vehicle comprising a boom assembly having at least two booms which are movably connected to each other and the vehicle, an extension boom, which comprises a free end of the boom assembly and a boom tip, the extension boom being linearly movable, a position sensor to measure the position of the extension boom, a control unit, adapted to transfer operator commands to control the boom assembly, adapted to receive and calculate the position data from the extension boom, wherein in case of the operator commando to bring the boom tip closer to the vehicle, and if the extension boom is positioned beyond a predetermined extension limit, the control unit will solely first control the extension boom until the extension boom position is below the predetermined extension limit and in case the extension boom is positioned below the predetermined extension limit, the control unit will control all booms of the boom assembly in parallel.

The invention allows that the boom assembly is automatically moved according to the position of the extension boom. The operator is freed of the need to assume the potential load on the boom assembly and making assumptions about possible loss of lifting power. The operator instead issues the move command with the control surfaces and the control unit, depending on the position sensor feedback issues the movement solely of the extension boom first or of the complete boom assembly right away. The workload on the operator is reduced and the workflow of the vehicle is increased by avoiding timely effort to manually move the boom assembly so that the lifting force is restored in case of exceeding weight of the load in the working tool.

The invention is further described according to Figures 1, 2 and 3.
Figure 1 shows a forestry vehicle, i.e. a harvester;
Figure 2 shows a forestry vehicle, i.e. a forwarder;
Figure 3 shows a scheme to control the boom assembly according to the invention.

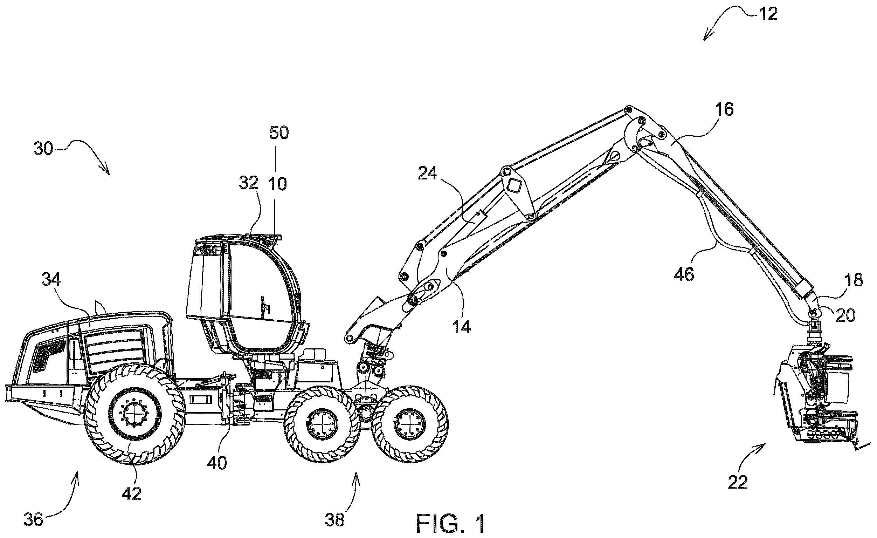

Figure 1 depicts a harvester vehicle 30. The harvester 30 consists of two chassis parts 36, 38 which are linked by a joint 40 to enable steering of the vehicle. Rear chassis 38 comprises an engine 34, constituting the main power source 34, which further drives one or more hydraulic pumps. The hydraulic pumps drive hydraulic actuators 24, which actuate the boom assembly 12 and its booms 14, 16, 18. The operator cabin or station 32 as well as the boom assembly 12 for handling the logs are provided on the front chassis 36. The cabin 32 enables the operator to overview the work area and provides control surfaces 50. Control unit 10 transforms operator input regarding the position of the boom assembly 12 in movement commands for the hydraulic actuators 24.

Boom assembly 12 can mounted on a slewing apparatus on the front chassis 36, that enables rotation and slewing of the boom assembly 12. Boom assembly 12 has a first and second boom 14, 16 which are rotatable connected to each other and further connected to the slewing apparatus. The second boom 16, being the boom having a free end, comprises an extension boom 18, which allows to drive out the boom tip 20 and the tool 22 by a linear sliding motion of the extension boom 18 in relation to the second boom 16 and extending the reach of the crane 12. Tool 22 is movably fixed to the boom tip 20 and may be a harvester head, a grapple tool or similar device for handling bulk material.

In the case of cutting a tree or log, boom assembly 12 is used to attach tool 22 to a tree stem and to cut the tree. The tree is then pulled through the tool 22 to remove any branches and is cut into logs of certain lengths.

After a tree is cut and has fallen over, the weight of the tree is held by the tool 22 and the boom assembly 12. At that time, the hydraulic power is used to move the feeding wheels and to power the saw blade to start and cutting it, while supporting the weight by the boom assembly 12. This can lead to a power decrease in hydraulic power due to the raised demand and may lead to a slow reaction time of all hydraulic consumers involved, including the boom assembly 12, the feeding wheel motors and the saw blade motor and hydraulic actuators 24. This will further lead to an increase of work time and a decrease of productivity which may also increase cost.

The control unit 10 may include a CPU able to compute data and signals related to the current position of the boom assembly 12 or the extension boom 18 and all its components as mentioned. The control unit 10 computes at least the position of the extension boom 18 and determines if the current position is a position greater or beyond a threshold value or predetermined extension limit. Such position sensors may also be included on the boom tip 20, and the booms 14, 16.

The position data from the sensor is interpreted by the control unit 10. The data can give information if the extension boom 18 is above the limit or below the limit.

The control unit 10 can compare the current position of the extension boom 18 to a predetermined position value or extension limit and determine if the extension boom 18 should be solely moved or if the boom assembly 12 is moved as a whole.

When the control unit 10 due to operator control is instructed to move the boom tip 20 closer to the vehicle and depending on the position of the extension boom 18, the control unit 10 determines which booms of the boom assembly 12 shall be used to complete the movement.

The control unit 10 can prevent that the boom assembly 12 is slow at the beginning of the movement due to an overload on the hydraulic actuators. The control unit 10 reduces the lever arm of the boom assembly 12 in a long reach situation by first solely moving the extension boom 18 inwards. This movement reduces the overall reach of the boom assembly 12 and further also provides an upward movement of the boom tip 20 due to the design of the boom assembly 12. After the position o the extension boom 18 has passed a predetermined limit or a predetermined threshold the control unit 10 switches the operation for solely using the extension boom to using all components of the boom assembly 12 at the same time simultaneously.

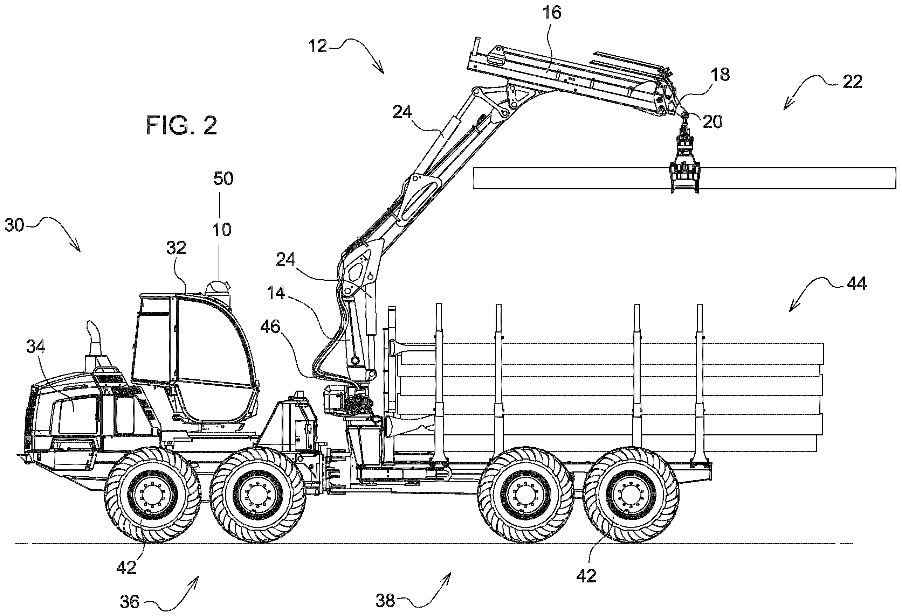

Figure 2 depicts a forwarder, a working vehicle 30 which is used to load logs and to transport these out of the forest area. The vehicle 30 comprises a front chassis 36 with an operator cabin or station 32 and a primary power source 34. The vehicle 30 is usually travelling on wheels 42, yet also tracked vehicles are available. The rear chassis 38 provides a loading space or bunk 44 where the loaded logs are placed. The boom assembly 12 in general has a similar setup as in Fig. 1 yet may not have a slewing apparatus as a harvester vehicle. The boom assembly 12 can be tilted and rotated so that the reach is provided around the vehicle 30 and the load space 44. The boom tip 20 usually comprises a grabbing tool as a working tool 22 to grab and handle logs of a particular size and length.

Such vehicles usually drive on forest roads and reach out to handle and load logs along the road side. As these vehicles are reduced in their mobility, the boom assembly 12 and extension boom 18 are used to ensure a wide reach. During these operations, the full reach of the boom assembly 12 and the extension boom 18 results in a large lift arm and could drastically lower the lifting torque or lifting power provided by the hydraulic actuators 24.

The boom assembly 12 is equipped with a position sensor of the extension boom 18. The sensor detects the current position in relation to a predetermined extension limit or a threshold. The control unit 10 will solely use the extension boom 18 if the position of the extension boom 18 is beyond the predetermined extension limit or threshold. At the time when the position is below the threshold, the control unit will utilize all hydraulic actuators in parallel to achieve the operator input to move the boom tip 22 closer to the vehicle 30.

The operator with the input on the control surfaces is freed from additional control input but can continue to move in the boom tip 22. The invention ensures that the boom tip 22 is moved inwards without a performance decrease of the boom assembly.

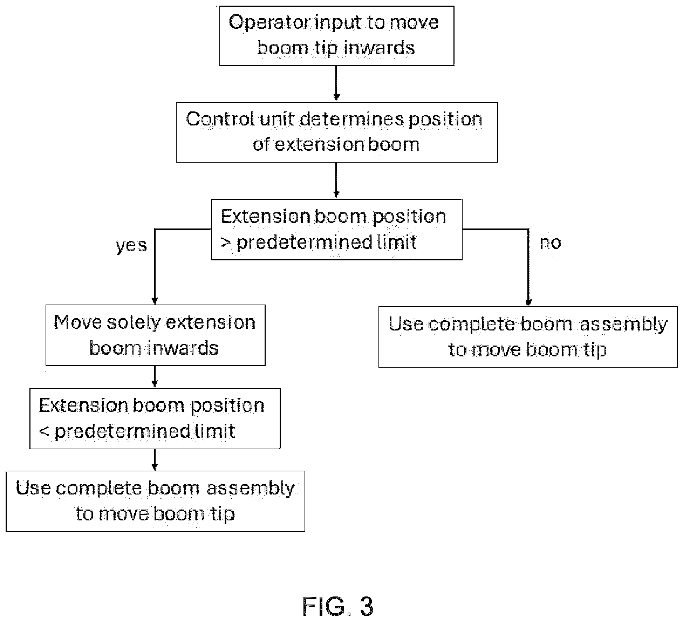

Figure 3 shows a method according to the invention. The operator in the cabin uses control surfaces 50 to input commands to control the boom assembly 12. The control surfaces can be joysticks, buttons, switches and the like. At the time of operator input the control unit 10 receives the command. In parallel the position of the extension boom 18 is detected by the control unit. The control unit compares the current position to a certain extension boom length being at a predetermined extension limit or position or a threshold that is a position that is before a full extended position. In case the current position is further extended than the predetermined limit or the threshold, the control unit 10 at first control the extension boom 18 to retract and ignores any control of the remainder of the boom assembly 12. The extension boom 18 moves inwards until the threshold position or limit is reached which is provided by feedback from the position sensor. Afterwards the control unit 10 uses commands to control the whole boom assembly 12 to further retract the boom tip 20 towards the vehicle inline with the operator command. Due to the design of the boom assembly 12, the retraction movement of the extension boom 18 will cause the boom tip 20 to lift from the ground so that even only movement of the extension boom 18 will provide a height increase of the grabbed load at the boom tip 20 or the tool 22.

With the inventions the operator is able to control horizontal and vertical movements of the boom tip 20. The control unit can further calculate how lift and extension positions are to be reached. When the operator uses the boom assembly 12 close to a maximum reach the available hydraulic force in the hydraulic actuators 24 may be inadequate to lift the boom tip 20, i.e. when holding a load like tree trunk or logs. The operation of the vehicle requires that the boom tip 20 is lifted and brought closer to the vehicle, i.e. load bunk. In case the lift force is inadequate, the boom tip 20 may drop and make ground contact. The invention prevents this by solely using the extension boom 18 and its hydraulic actuator in case the reach is near a maximum and the operator gives commands to raise and bring the boom tip 20 closer to the vehicle.

The inventions make the control of the speed and pressure in the remainder of the boom assembly 12 and its actuators 24 inessential, as well as a feedback loop in the control unit 10. The threshold or extension limit position to define a long reach or maximum reach can be selected in the operation control unit 10 so that depending on the current expected load the behavior of the control unit 10 can be adapted.

## Claims

1. Method for controlling a boom assembly, the boom assembly being adapted for use on a forestry vehicle,
the boom assembly comprising at least two booms which are movably connected to each other and the vehicle,
the boom assembly being controlled by hydraulic power,
further comprising an extension boom, which comprises a free end of the boom assembly and a boom tip, the extension boom being linearly movable,
the boom assembly comprising a position sensor to measure the position of the extension boom,
a control unit, adapted to transfer operator commands to control the boom assembly, adapted to receive and calculate the position data from the extension boom, wherein, when the operator issues a command to bring the boom tip closer to the vehicle, in case the extension boom is positioned beyond a predetermined extension limit, the control unit will solely first control the extension boom, and
in case the extension boom is positioned below the predetermined extension limit, the control unit will control all booms of the boom assembly in parallel.

2. Method of claim 1, wherein the method is adapted to be used in a forest harvester vehicle.

3. Method of claim 1, wherein in case the extension boom is beyond the predetermined extension the control unit uses all booms of the boom assembly, when the extension boom has moved inwards below the predetermined extension limit.

4. System for a forestry vehicle, comprising
a boom assembly having at least two booms which are movably connected to each other and the vehicle,
an extension boom, which comprises a free end of the boom assembly and a boom tip, the extension boom being linearly movable,
a position sensor to measure the position of the extension boom,
a control unit, adapted to transfer operator commands to control the boom assembly, adapted to receive and calculate the position data from the extension boom,
wherein in case of the operator commando to bring the boom tip closer to the vehicle, and if the extension boom is positioned beyond a predetermined extension limit, the control unit will solely first control the extension boom until the extension boom position is below the predetermined extension limit and
in case the extension boom is positioned below the predetermined extension limit, the control unit will control all booms of the boom assembly in parallel.

5. Forestry vehicle comprising
a boom assembly having at least two booms which are movably connected to each other and the vehicle,
an extension boom, which comprises a free end of the boom assembly and a boom tip, the extension boom being linearly movable,
a position sensor to measure the position of the extension boom,
a control unit, adapted to transfer operator commands to control the boom assembly, adapted to receive and calculate the position data from the extension boom, wherein in case of the operator commando to bring the boom tip closer to the vehicle, and if the extension boom is positioned beyond a predetermined extension limit, the control unit will solely first control the extension boom until the extension boom position is below the predetermined extension limit and
in case the extension boom is positioned below the predetermined extension limit, the control unit will control all booms of the boom assembly in parallel.
